## Europäisches Patentamt
## European Patent Office
## Office européen des brevets

(11) Veröffentlichungsnummer: **0 317 548**
**A2**

# EUROPÄISCHE PATENTANMELDUNG

(21) Anmeldenummer: 89100128.1

(22) Anmeldetag: 24.06.85

(51) Int. Cl.⁴: **A 01 B 49/02**
**A 01 B 35/26**

(30) Priorität: 30.06.84 DE 3424250
26.07.84 DE 3427655

(43) Veröffentlichungstag der Anmeldung:
24.05.89 Patentblatt 89/21

(84) Benannte Vertragsstaaten:
AT BE CH DE FR GB IT LI NL SE

(60) Veröffentlichungsnummer der früheren Anmeldung nach
Art. 61 EPÜ: **0 172 358**

(71) Anmelder: **KUHN S.A.**
**4, Impasse des Fabriques**
**F-67700 Saverne (FR)**

(72) Erfinder: **Weichel, Ernst**
**Bahnhofstrasse 1**
**D-7326 Heiningen (DE)**

(74) Vertreter: **Seemann, Norbert W.**
**Brehmstrasse 37**
**D-7320 Göppingen (DE)**

(54) **Bodenbearbeitungsmaschine.**

(57) Die Erfindung betrifft eine Bodenbearbeitungsmaschine zum Unterschneiden, Anheben und Auflockern einer sich etwa über die gesamte Arbeitsbreite erstreckenden Bodenschicht, sowie gegebenenfalls zur oberflächige Krümelung dieser Bodenschicht. Die erfindungsgemässe Bodenbearbeitungsmaschine weist Scharen (2b) auf, die als annähernd dreieckige Platte ausgebildet sind. Jede plattförmige Schar (2b) und deren seitliche Schneidkanten verlaufen in einem sehr spitzen Winkel sur Horizontalen von der Spitze schräg nach hinten ansteigend.

Jede Schar (2b) weist auch noch hinter ihrer vorderen Spitze, eine, die Scharplatte durchdringende, tunnelförmigen Wölbung auf, unter welcher sich der Scharhalter, mittels welchem die Schar (2b) am zugeordneten Haltestiel (3, 3a) befestigt ist, erstreckt.

FIG. 1

EP 0 317 548 A2

**Beschreibung**

Die vorliegende Erfindung betrifft eine Bodenbearbeitungsmaschine bestehend aus einem sich quer zur Fahrtrichtung erstreckenden Rahmen an dem mittels Haltestielen Scharen zum Unterschneiden, Anheben und Auflockern von einer sich etwa über die gesamten Arbeitsbreite erstreckenden Bodenschicht befestigt sind, wobei jede Schar als von der Spitze nach hinten schräg ansteigende, annähernd dreieckige Platte ausgebildet ist, deren seitliche Schneidkanten von der Spitze schräg nach hinten und zur Seite verlaufen, und die Schar einen Scharhalter aufweist, mittels welches sie am zugeordneten Haltestiel befestigt ist.

Eine Bodenbearbeitungsmaschine dieser Gattung ist aus dem DE - U - 80 33 066 bekannt. Diese bekannte Bodenbearbeitungsmaschine besteht aus einem sich quer zur Fahrtrichtung erstreckenden Rahmen, an dem Taschen vorgesehen sind, in je welcher ein Haltestiel für ein Lockerungswerkzeug angeordnet ist. Jeder Haltestiel weist einen stehenden Arm und einen am unteren Ende des stehenden Arms angeordneten in Fahrtrichtung ragenden Haltearm auf. Das Oberteil des stehenden Arms erstreckt sich in der zugeordneten Tasche und ist in dieser höhenverstellbar geführt. Das Vorderteil des Haltearms trägt das zugeordnete Lockerungswerkzeug.

Dieses Lockerungswerkzeug besteht aus einer plattförmigen Schar und einer sich unter dieser Schar erstreckenden Hülse. Das Vorderteil des Haltearms erstreckt sich in dieser Hülse und ist mit dieser lösbar befestigt. Die Schar besteht aus einer von seiner Spitze nach hinten schräg ansteigenden, in Draufsicht annähernd dreieckigen Platte, deren seitliche Schneidkanten von der Spitze schräg nach hinten und zur Seite ansteigend verlaufen. Der Rahmen weist ferner noch einen Dreipunktbock auf, mittels welches die Bodenbearbeitungsmaschine an einen Schlepper kuppelbar ist, sowie Lagerkonsolen zwischen welchen einen sich quer zur Fahrtrichtung erstreckenden motorisch angetriebenen Werkzeuträger gelagert ist, der Werkzeuge zur Bodenkrümelung aufweist. Da das Vorderteil des Haltearms des Haltestieles sich in einem unterhalb der plattförmigen Schar angeordneten als Hülse ausgebildeten Scharhalter erstreckt, wird eine gute verschleissarme Befestigung des Lockerungswerkzeuges am Haltestiel erreicht. Da weiter die Scharen je aus einer Platte bestehen, wird der Erdboden etwa auf der gesamten Arbeitsbreite der Maschine in vertikaler Richtung angehoben.

Nachteilig bei dieser bekannten Konstruktion ist jedoch, dass, aufgrund der Anordnung des Vorderteils des Haltearms des Haltestieles unterhalb der plattförmigen Schar, der Winkel dieser plattförmigen Schar relativ steil ist. Dadurch entstehen mehrere Nachteile. Ein erster Nachteil ist darin zu sehen, dass das Profil des Untergrunds, von welchem der sich mindestens etwa über die gesamte Arbeitsbreite der Maschine erstreckenden angehobenen Erdboden abgelöst worden ist, eine äusserst grosse unerwünschte Wellenform aufweist. Ein zweiter Nachteil ist darin zu sehen, dass der äusserst steile Anstellwinkel der Schare, einen hohen Kraftbedarf verursacht.

Die Aufgabe der vorliegenden Erfindung besteht also darin, die zuvor erwähnten Nachteile der bekannten Bodenbearbeitungsmaschine zu beseitigen.

Diese Aufgabe wird dadurch gelöst, indem die annähernd dreieckige plattförmige Schar und deren seitliche Schneidkanten in einem sehr spitzen Winkel zur Horizontalen von der Spritze schräg nach hinten ansteigend verlaufen, und dass die Schar hinter ihrer vorderen Spitze eine, die Scharplatte durchdringende, tunnelförmige Wölbung aufweist, unter welcher sich der Scharhalter erstreckt.

Mit der erfindungsgemässe Ausführung des Lokkerungswerkzeuges wird erreicht, dass unter Beibehaltung des Vorteiles der Anordnung des Scharhalters unterhalb der Schar, sowohl der "Welleneffekt" als auch der Kraftbedarf äusserst gering sind. Ausserdem wird der unterschnittene Erdboden schonend angehoben und während des Anhebens nicht gewendet. Diese Vorteile sind darauf zurückzuführen, dass die plattförmige Schar einen sehr geringen Anstellwinkel aufweist, und dass nur Raum für den Scharhalter in dem Mittelbereich dieser plattförmigen Schar geschaffen worden ist.

Vorteilhafterweise umschliesst die tunnelförmige Wölbung den Scharhalter genau passend.

Das schonende Anheben des unterschnittenen Erdbodens ist äusserst wichtig, wenn dem Gerät zur Bodenlockerung noch ein Gerät zur Krümelung der obersten Bodenschicht nach geschaltet wird. Dieses Gerät zur Krümelung der obersten Bodenschicht wird am Maschinenrahmen angeordnet und weist einen sich quer zur Fahrtrichtung erstreckenden Werkzeugträger auf, der motorisch angetriebene Werkzeuge trägt.

Weitere Einzelheiten, Vorteile und Merkmale der Erfindung ergeben sich aus den anderen Unteransprüche, sowie aus der folgenden Beschreibung und den Zeichnungen, auf die bezüglich der Offenbarung aller nicht im Text beschriebenen Einzelheiten ausdrücklich verweisen wird. Es zeigen:

Fig. 1 : eine schematische Draufsicht auf eine Bodenbearbeitungsmaschine gemäss vorliegender Erfindung, die an einen Schlepper angekuppelt ist,

Fig. 2 : eine schematische Seitenansicht einer erfindungsgemässen Bodenbearbeitungsmaschine, und

Fig. 3 : eine schematische Seitenansicht einer weiteren erfindungsgemässen Bodenbearbeitungsmaschine, die ebenfalls an einen schlepper angekuppelt ist,

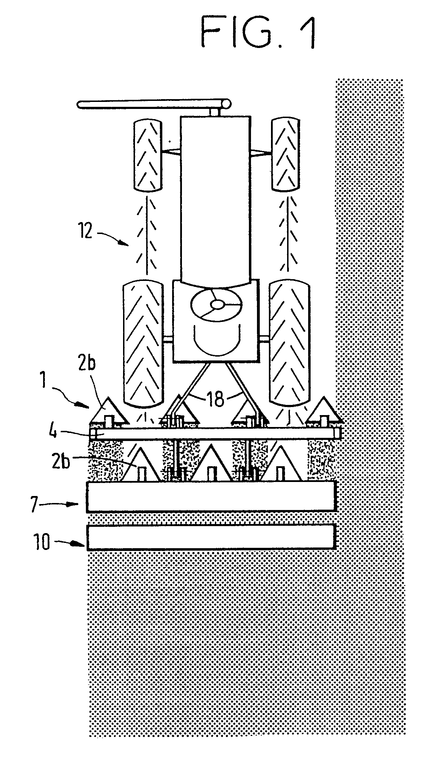

Wie aus Figur 1 zu ersehen ist, ist eine erfindungsgemässe Bodenbearbeitungsmaschine am Kraftheber (18) eines Schleppers (12) angekuppelt. Diese bearbeitungsmaschine besteht aus einem Gerät zur Bodenlockerung (1) und einem Gerät zur Krümelung einer obersten Bodenschicht (7). Die Bodenbearbeitungsmaschine kann auch noch hinter dem Gerät zur Krümelung (7), mit einer Walze (10) versehen sein, die zur weiteren oberflächigen Krümelung bzw. zur Rückverfestigung dient.

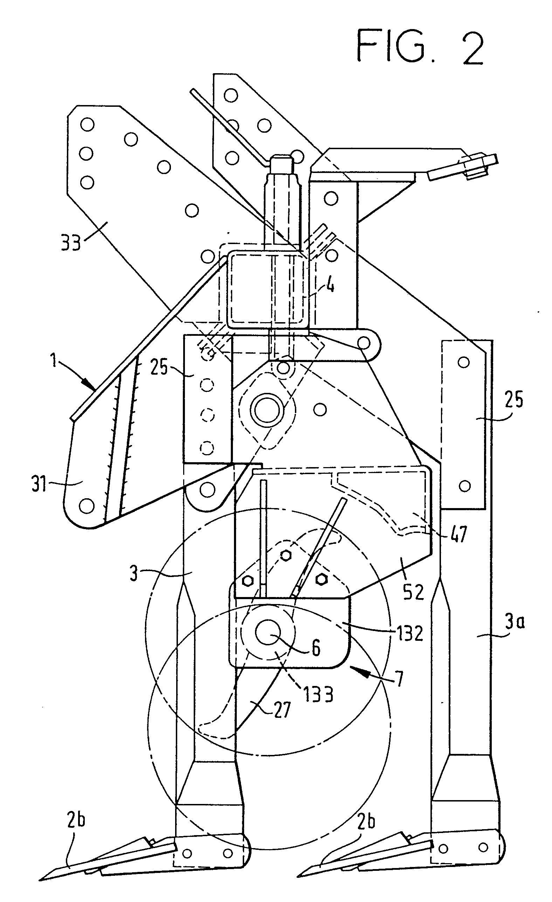

Die erfindungsgemässe Bodenbearbeitungsmaschine gemäss Figur 2, besteht aus einer Kombination eines Gerätes zur Bodenlockerung (1) und eines Gerätes zur Krümelung einer obersten Bodenschicht (7). Der Rahmen (4) des Gerätes zur Bodenlockerung (1) und der Rahmen (47) des Gerätes zur Krümelung (7) sind miteinander gekuppelt und bilden den Rahmen der Bodenbearbeitungsmaschine.

Der Rahmen (4) des Gerätes zur Bodenlockerung (1) weist nach vorne unten ragende Konsolen (31) und nach vorne oben ragende Konsolen (33) auf, welche zur Kupplung der Bodenbearbeitungsmaschine an den Kraftheber (18) des Schleppers (12) dienen.

Am Rahmen (4) des Gerätes zur Bodenlockerung (1) sind ferner Stielhalter (25) angeordnet, in je welchen einen Haltestiel (3,3a) für eine Schar (2b) höhenverstellbar und lösbar angebracht ist. Diese stielhalter (25) sind am Rahmen (4) angeklemmt und sind seitlich verstellbar.

Jede Schar (2b) weist einen Scharhalter auf, mittels welches sie am unteren Ende des zugeordneten Haltestieles (3, 3a) lösbar befestigt ist. Die Schar (2b) ist als annähernd dreieckige Platte ausgebildet, deren Spitze in Fahrtrichtung zeigt, und deren seitliche Schneidkanten von der Spitze schräg nach hinten und zur Seite verlaufen. Gemäss der Erfindung, verlaufen jede annähernd dreieckige plattförmige Schar (2b) und deren seitliche Schneidkanten in einem sehr Spitzen Winkel zur Horizontalen von der Spitze schräg nach hinten ansteigend. Dadurch bleiben einerseits der "Welleneffekt" und der Kraftbedarf sehr gering, und andererseits wird der Boden auf beliebige Tiefe schonend, d. h. ohne Mischung und ohne Wendung unterchnitten, angehoben und gelockert, so dass er sich sehr gut mit einer anschliessenden Krümelarbeit ergänzt, und das, ohne dass es zu einer Verschmierung des stehenbleibenden Untergrundes kommen kann. Gemäss der Erfindung, weist die Schar (2b) auch, hinter ihrer vorderen Spitze, eine die Scharplatte durchdringende, tunnelförmige Wölbung auf, unter welcher sich der Scharhalter erstreckt, und die den Scharhalter genau passend umschliesst.

Am Rahmen (47) des Gerätes zur Krümelung (7) sind seitliche Lagerkonsolen befestigt. Diese Lagerkonsolen bestehen aus Lagerschilden (52) an je welchen eine Lagerplatte (132) lösbar befestigt ist, und welche das Lager (133) eines rotierenden Werkzeugträgers (6) mit Werkzeuge zur Krümelung des Bodens (27) aufnimmt. Dieser rotierende mit den Werkzeuge (27) versehene Werkzeugträger (6) wird über ein nicht dargestelltes Getriebe von der Zapfwelle des Schleppers (12) motorisch angetrieben.

Aus Figur 2, kann auch noch entnommen werden, dass das Gerät zur Bodenlockerung (1) gegenüber dem Gerät zur krümelung (7) so angeordnet ist, dass die vorderen Scharen (2b) sich vor und unterhalb der Bewegungsbahnen der rotierenden Werkzeuge (27) erstrecken. Desweiteren erstrecken sich die Haltestielen (3), mittels welchen diese vordere Scharen (2b) am Rahmen (4) befestigt sind, zwischen den Bewegungsbahnen der rotierenden Werkzeuge (27).

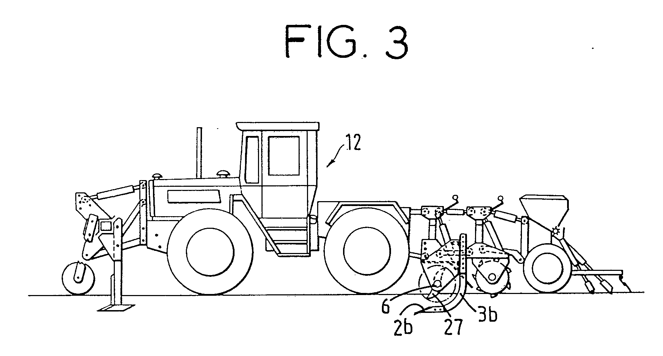

Bei dem Ausführungsbeispiel nach Figur 3, sind die Scharen (2b) an an der Rückseite des Rahmens anbringbaren Haltestielen (3b) angebracht. Diese Haltestielen (3b) sind nach vorne abgebogen und erstrecken sich unter dem Werkzeugträger (6) nach vorne, sodass die Scharen (2b) sich ebenfalls vor und unterhalb den Bewegungsbahnen der rotierenden Werkzeuge (27) erstrecken.

## Patentansprüche

1. Bodenbearbeitungsmaschine bestehend aus einem sich quer zur Fahrtrichtung erstreckenden Rahmen (4, 47) an dem mittels Haltestielen (3, 3a, 3b) Scharen (2b) zum Unterschneiden, Anheben und Auflockern von einer sich etwa über die gesamte Arbeitsbreite erstreckenden Bodenschicht befestigt sind, wobei jede Schar (2b) als von der Spitze nach hinten schräg ansteigende, annähernd dreieckige Platte ausgebildet ist, deren seitliche Schneidkanten von der Spitze schräg nach hinten und zur Seite verlaufen, und die Schar (2b) einen Scharhalter aufweist, mittels welches sie am zugeordneten Haltestiel (3, 3a, 3b) befestigt ist, dadurch gekennzeichnet, dass die annähernd dreieckige plattförmige Schar (2b) und deren seitliche Schneidkanten in einem sehr spitzen Winkel zur Horizontalen von der Spritze schräg nach hinten ansteigend verlaufen, und dass die Schar (2b) hinter ihrer vorderen Spitze eine, die Scharplatte durchdringende tunnelförmige Wölbung aufweist, unter welcher sich der Scharhalter erstreckt.

2. Bodenbearbeitungsmaschine nach Anspruch 1, dadurch gekennzeichnet, dass die tunnelförmige Wölbung den Scharhalter genau passend umschliesst.

3. Bodenbearbeitungsmaschine nach einem der Ansprüche 1 oder 2, dadurch gekennzeichnet, dass sie ein an dem Rahmen (4) angeordneten Arbeitsgerät zur Krümelung einer obersten Bodenschicht (7) aufweist, das an einem sich quer zur Fahrtrichtung erstreckenden Werkzeugträger (6) angeordneten motorisch angetriebenen Werkzeuge (27) aufweist.

4. Bodenbearbeitungsmaschine nach Anspruch 3, dadurch gekennzeichnet, dass die Scharen (2b) sich vor und unterhalb der Bewegungsbahnen der rotierenden Werkzeuge (27) erstrecken.

5. Bodenbearbeitungsmaschine nach mindestens einem der Ansprüche 3 oder 4, dadurch gekennzeichnet, dass sich die Haltestielen (3) zwischen den Bewegungsbahnen der Werkzeuge (27) erstrecken.

6. Bodenbearbeitungsmaschine nach mindestens einem der Ansprüche 3 bis 5, dadurch gekennzeichnet, dass die Scharen (2b) an an der Rückseite des Rahmens (47) anbringbaren, nach vorne abgebogenen Haltestielen (3b) angebracht sind, die sich unter dem Werkzeugträger (6) nach vorne erstrecken.

7. Bodenbearbeitungsmaschine nach mindestens einem der Ansprüche 1 bis 6, dadurch gekennzeichnet, dass die Haltestiele (3, 3a, 3b) höhenverstellbar und leicht abnehmbar in an dem Rahmen (4, 47) angeordneten Stielhaltern (25) anbringbar sind.

8. Bodenbearbeitungsmaschine nach mindestens einem der Ansprüche 1 bis 7, dadurch gekennzeichnet, dass die Haltestiele (3, 3a, 3b) in an dem Rahmen (4, 47) angeordneten seitlich verstellbaren Stielhatern (25) anbringbar sind.

EP 0 317 548 A2

# FIG. 1

# FIG. 2

# FIG. 3